Europäisches Patentamt

European Patent Office

Office européen des brevets

(19)

(11) Veröffentlichungsnummer : **0 145 894**
**B1**

(12) **EUROPÄISCHE PATENTSCHRIFT**

(45) Veröffentlichungstag der Patentschrift :
04.03.87

(21) Anmeldenummer : 84112726.9

(22) Anmeldetag : 22.10.84

(51) Int. Cl.⁴ : **F 22 B   1/06**, F 22 B 37/36,
**G 21 C   13/02**

(54) **Natriumbeheizter Dampferzeuger mit zusätzlicher Trennwand.**

(30) Priorität : 04.11.83 DE 3339982

(43) Veröffentlichungstag der Anmeldung :
26.06.85 Patentblatt 85/26

(45) Bekanntmachung des Hinweises auf die Patenterteilung : 04.03.87 Patentblatt 87/10

(84) Benannte Vertragsstaaten :
BE DE FR GB IT NL

(56) Entgegenhaltungen :
EP-A- 0 064 920
FR-A- 1 445 720
FR-A- 2 330 985

(73) Patentinhaber : **INTERATOM Gesellschaft mit beschränkter Haftung**
**Friedrich-Ebert-Strasse**
**D-5060 Bergisch Gladbach 1 (DE)**

(72) Erfinder : **Hahn, Günter, Dipl.-Ing.**
**Am Brucker Bach 42**
**D-5060 Bergisch-Gladbach (DE)**

(74) Vertreter : **Mehl, Ernst, Dipl.-Ing. et al**
**Postfach 22 01 76**
**D-8000 München 22 (DE)**

EP 0 145 894 B1

## Beschreibung

Die vorliegende Erfindung betrifft einen Dampferzeuger der im Oberbegriff des Patentanspruchs angegebenen Art, wie er vorzugsweise in Kernenergieanlagen verwendet wird, die mit einem schnellen Brutreaktor betrieben und mit flüssigem Natrium gekühlt werden. Da Natrium und Wasser bekannterweise sehr heftig miteinander reagieren, sind besondere Vorsichtsmaßnahmen erforderlich, um die beiden Medien sicher voneinander zu trennen oder, wo dies wie im Inneren des Dampferzeugers nur schwer möglich ist, die Wirkungen einer solchen Reaktion zu begrenzen. Letzteres Problem ist jedoch nicht Gegenstand dieser Erfindung, sondern nur die Sicherung gegen das Zusammentreffen von Natrium und Wasser außerhalb des Dampferzeugers. Soweit nur ein oder mehrere Punktlecks in den das eine Medium führenden Leitungen in Betracht gezogen werden, mag die Sicherung durch das Einschließen des anderen Mediums in den dazugehörigen Leitungen ausreichend erscheinen. Dies gilt jedoch nicht mehr, wenn die Möglichkeit des plötzlichen Abreißens einer ganzen Rohrleitung in Betracht gezogen wird ; die dann beim Ausströmen des Mediums aus der zerstörten Rohrleitung unvermeidlicherweise auftretenden Rückstoßkräfte (besonders ausgeprägt im Falle einer hochgespannten dampfführenden Leitung) können zu unkontrollierbaren Bewegungen des Rohrstumpfes führen, durch die ihrerseits auch wieder Leitungen beschädigt werden können, darunter auch solche, in denen das jeweils andere Medium zirkuliert.

In bislang gebauten Anlagen dieser Art (wozu auf die in Kalkar in Ausführung befindliche Anlage des Typs SNR 300 verwiesen wird) ist dieses Problem gelöst worden, indem die das eine Medium führenden Rohrleitungen räumlich nach Möglichkeit von denen getrennt wurden, die das andere Medium führen, etwa in der Art, daß der Zu- und Abfluß des Natriums über radial in den Wärmetauscher eintretende Leitungen erfolgt, während die Wasser/Dampf führenden Leitungen axial in den Wärmetauscher ein- bzw. aus diesem austreten. Dies brachte unerwünschte Beschränkungen der konstruktiven Freizügigkeit bei der Planung der Anlage mit sich. Darüberhinaus waren aufwendige Schutzrohre für die Rohrleitungen erforderlich.

Die vorliegende Erfindung hat zur Aufgabe, eine einfachere Lösung des oben genannten Problems anzugeben, die darüberhinaus besser in der Lage ist, der Druckwirkung einer etwa außerhalb der Kernenergieanlage stattfindenden Explosion (etwa einer Wolke brennbarer, z. B. aus einem beschädigten Tankschiff austretender Gase) zu widerstehen.

Die Lösung dieser Aufgabe erfolgt durch die im kennzeichnenden Teil des Patentanspruchs angegebenen Mittel. Es wird so eine sich über den gesamten Bereich außerhalb des Dampferzeugers erstreckende dritte Trennwand geschaffen, die die Medien auch dann voneinander zuverlässig trennt, wenn etwa gleichzeitig in beiden Leitungssystemen auftretende Lecks angenommen werden, und die die infolge Abreißens unkontrolliert herumschlagende Leitungen unter Umständen auch um den Preis der eigenen Zerstörung daran hindert, Leitungen des jeweils anderen Systems zu beschädigen. Indem die Rohrböden selbst zu Teilen dieser Trennwand gemacht werden, wird der kritische Bereich unmittelbarer Nachbarschaft auf die von den Rohrböden ausgehenden Wärmetauscherrohre beschränkt. Dabei können die Faltenbalgkompensatoren ohne weiteres wärmedehnungsbedingte Lageänderungen zwischen Wärmetauscher und umgebender Gebäudewand ausgleichen. Sie sind bis zu einem gewissen Grade auch in der Lage, der Druckwirkung einer äußeren Explosion elastisch nachzugeben und so Schäden vom Dampferzeuger fernzuhalten.

Ein Ausführungsbeispiel der Erfindung ist in der Zeichnung dargestellt, und zwar zeigt

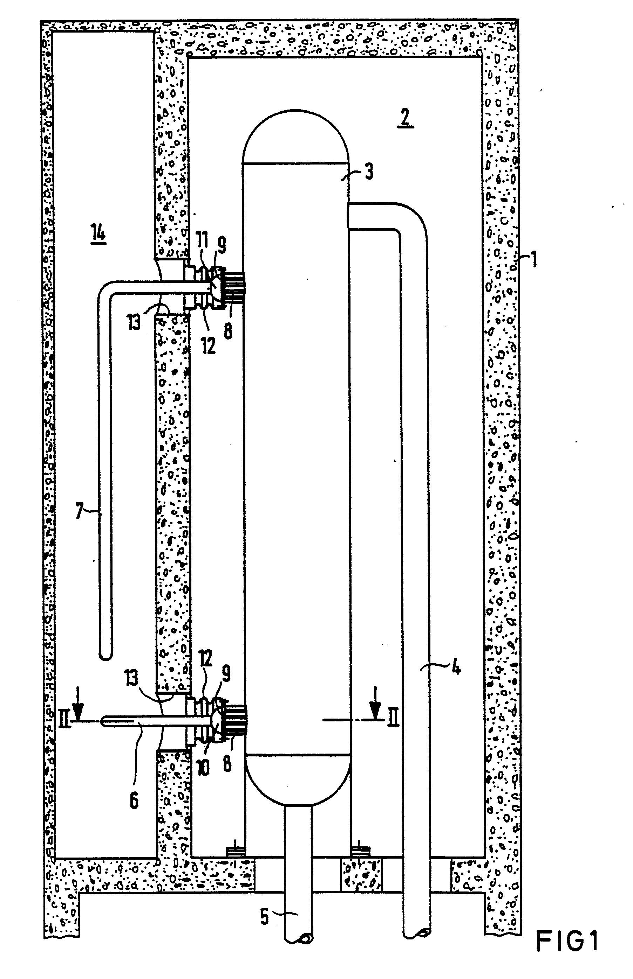

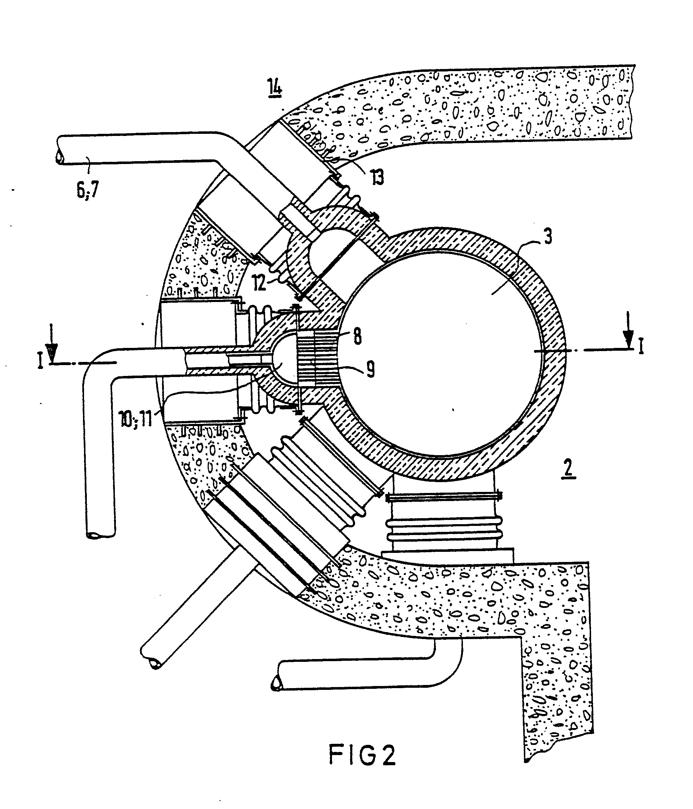

Figur 1 einen Dampferzeuger mit Teilen der ihn umgebenden Gebäudestruktur entsprechend dem Schnitt I-I der Fig. 2 und

Figur 2 in vergrößertem Maßstab einen Querschnitt entsprechend der Linie II-II der Fig. 1.

Ein nur teilweise dargestelltes Gebäude 1 einer Kernenergieanlage wird durch Trennwände in verschiedene Bereiche unterteilt, unter anderem einen Bereich 2, in dem ein Dampferzeuger 3 angeordnet ist. Diesem fließt über eine erste Leitung 4 das in dem hier nicht gezeigten Kernreaktor erhitzte Natrium zu, das nach Abkühlung durch eine zweite Leitung 5 in den Kernreaktor zurückkehrt. Die Abkühlung geschieht durch das Verdampfen des über eine weitere Leitung 6 in den Dampferzeuger 3 eingeführte Speisewasser. Der Dampf strömt über eine weitere Leitung 7 z. B. einer (hier ebenfalls nicht gezeigten) Dampfturbine zu. Der Wärmetausch erfolgt über hier nur im Ansatz angedeutete Rohre 8, deren weiterer Verlauf im Wärmetauscher 3 (z. B. in Form von Wendeln) für das Verständnis dieser Erfindung unerheblich ist und die in Rohrböden 9 enden. Diese begrenzen einen Speisewasserverteiler 10 und einen Dampfsammler 11. Die Rohrböden 9 sind mit über die Kontur des Speisewasserverteilers 10 bzw. des Dampfsammlers 11 hinausragenden Flanschen versehen, an denen Faltenbalgkompensatoren 12 bekannter Bauart dicht befestigt sind. Diese sind an ihrem anderen Ende ebenso dicht mit metallischen Auskleidungen 13 verbunden, die die Durchtrittsöffnungen durch die Gebäudewandungen 1 begrenzen. Die Faltenbälge 12 trennen so den Bereich 2 von einem weiteren Bereich 14 ; in ersterem kann ein unterstellter Schaden an den Leitungen 4 oder 5 nur zu einem Austreten von Natrium führen, das dann immer noch durch zwei Wände (einen Faltenbalg 12 und die Wand der Rohre 6, 7) vom Wasser getrennt ist. Umgekehrt gilt gleiches bei einem in letzteren Leitungen auftretenden Leck. Auch bei gleichzeitig in beiden Systemen auftretenden Lecks ist noch eine sichere Trennung voneinander gewährleistet. Die Faltenbalgkompensatoren 12 können allen wärmedehnungsbedingten Verschiebungen zwischen Wärmetauscher 3 und Gebäudestruktur 1 folgen. Sie sind auch in der Lage, die Wirkung einer äußeren Explosion (deren Druckwelle sich vom Bereich 14 in den Bereich 2 sich fortpflanzend zu denken ist) elastisch zu widerstehen, wodurch der Wärmetauscher 3 selbst vor Schaden bewahrt werden kann. Zu beachten ist die so gewonnene Freiheit in der Anordnung von Natrium und Wasser führenden Leitungen zueinander, die nur noch durch die räumliche Zuordnung der einzelnen Anlageteile zueinander bestimmt wird.

**Patentanspruch**

In einem Gebäude (1) eingebauter Dampferzeuger (3) mit einem mit Wasser reagierenden Heizmittel, der mit durch Rohrböden (9) begrenztem Verteiler (10) für Speisewasser und Dampfsammler (11) versehen ist, dadurch gekennzeichnet, daß jeweils zwischen einem der Rohrböden und einer Gebäudewand (13) ein Faltenbalgkompensator (12) flüssigkeitsdicht unter Einschluß des Rohrbodens (9) und der zugehörigen Anschlußleitung (6, 7) angeordnet ist.

**Claim**

Steam generator (3) which is built into a building (1) and has a heating medium, which reacts with water, and which steam generator is provided with a distributor (10), which is limited by end plates (9), for feed water and a steam collector (11), characterised in that between one of the end plates and a building wall (13) is respectively arranged a bellows compensator (12) so as to be liquid-tight incorporating the end plates (9) and the corresponding connection pipe (6, 7).

**Revendication**

Générateur de vapeur (3), qui est monté dans un bâtiment (1), qui a un agent de chauffage réagissant sur l'eau et qui est muni d'un collecteur de vapeur (11) et d'un répartiteur (10) de l'eau d'alimentation délimité par des plaques tubulaires (9), caractérisé en ce qu'entre chacune des plaques tubulaires et un mur (13) du bâtiment est disposé de manière étanche aux liquides un compensateur à soufflet (12), enfermant la plaque tubulaire (9) et le conduit de raccordement (6, 7) qui lui est associé.

0 145 894

FIG1

FIG 2